# FASCICULE DE BREVET EUROPEEN

(11) **EP 3 222 521 B1**
(45) Date de publication et mention de la délivrance du brevet: **03.07.2019**
(21) Numéro de dépôt: 17161415.9
(22) Date de dépôt: 16.03.2017
(51) Int. Cl.: B64C 25/40

(54) **SYSTEME DE DESENGAGEMENT VERROUILLABLE D'ACTIONNEUR DE ROUE SUR UN ATTERISSEUR D AERONEF**
VERRIEGELBARES DEBLOCKIERSYSTEM EINES STELLGLIEDS AM RAD DES FAHRWERKS EINES LUFTFAHRZEUGS
LOCKABLE WHEEL ACTUATOR DISENGAGEMENT SYSTEM ON AN AIRCRAFT LANDING GEAR

(30) Priorité: 21.03.2016 FR 1652426
(43) Date de publication de la demande: 27.09.2017
(73) Titulaire: Safran Landing Systems, 78140 Vélizy-Villacoublay (FR)
(72) Inventeur: BELLENGER, Vincent, 78140 VELIZY-VILLACOUBLAY (FR)
(74) Mandataire: Decorchemont, Audrey Véronique Christèle

(56) Documents cités:
- EP-A1- 2 982 603
- EP-A2- 2 543 593
- WO-A1-2011/073587
- WO-A1-2015/040364
- FR-A- 1 503 853
- FR-A1- 3 011 531
- FR-A1- 3 017 367
- JAMES D HELM ET AL: "Locking Actuators Today and Beyond", SAE TECHNICAL PAPER SERIES, vol. 1, 1 janvier 1988 (1988-01-01), XP055397446, 400 Commonwealth Drive, Warrendale, PA, United States DOI: 10.4271/881434

## Description

L'invention concerne le domaine général des trains d'atterrissage pour aéronef équipés d'un système d'entraînement à rotation de la roue du train d'atterrissage.

### ARRIERE PLAN DE L'INVENTION

Il est connu par exemple du document brevet FR3011531 A1, un train d'atterrissage pour aéronef comportant :
- au moins une roue pour le roulage de l'aéronef sur le sol ;
- un système d'entraînement à rotation de la roue mobile entre une position embrayée vis-à-vis de la roue et une position de sécurité en passant par une position débrayée vis-à-vis de la roue ;
- un système de manoeuvre relié au système d'entraînement pour le déplacer entre ses positions débrayée et embrayée.

Il a été constaté qu'en cas de rupture du système de manoeuvre qui commande le passage entre les positions débrayée et embrayée, il y a un risque pour que le système d'entraînement reste couplé mécaniquement avec la roue. Il est par conséquent souhaitable de fournir une solution permettant, en cas de rupture du système de manoeuvre, de découpler le système d'entraînement vis-à-vis de la roue.

Par ailleurs, WO2015/040364 décrit également un système d'entraînement d'une roue d'un train d'atterrissage d'aéronef.

### OBJET DE L'INVENTION

Un objet de la présente invention est de fournir un train d'atterrissage d'aéronef résolvant tout ou partie des problèmes précités.

### RESUME DE L'INVENTION

A cette fin, il est proposé selon l'invention un train d'atterrissage tel que défini dans la revendication 1.

Le système d'entraînement à rotation de la roue du train d'atterrissage est agencé pour se déplacer entre une position embrayée vis-à-vis de la roue et une position de sécurité dans laquelle il est désengagé de la roue, c'est-à-dire qu'il n'est pas embrayé.

Entre ces positions extrêmes du système d'entraînement, que sont la position embrayée et la position de sécurité se trouve une position intermédiaire qui est dite position débrayée. Lors du passage entre la position débrayée et la position de sécurité, le système d'entraînement est toujours débrayé par rapport à la roue. Lorsque le système d'entraînement est débrayé vis-à-vis de la roue, il n'y a pas de liaison mécanique, entre ce système d'entraînement et la roue, susceptible de transmettre un effort de mise en rotation de la roue par ce système d'entraînement.

Par ailleurs, lorsque le système d'entraînement se trouve dans sa position débrayée, il est alors rapproché de la roue par rapport à son éloignement de la roue lorsqu'il est dans sa position de sécurité.

Dans cette position débrayée, comme dans la position de sécurité, le système d'entraînement est toujours débrayé vis-à-vis de la roue.

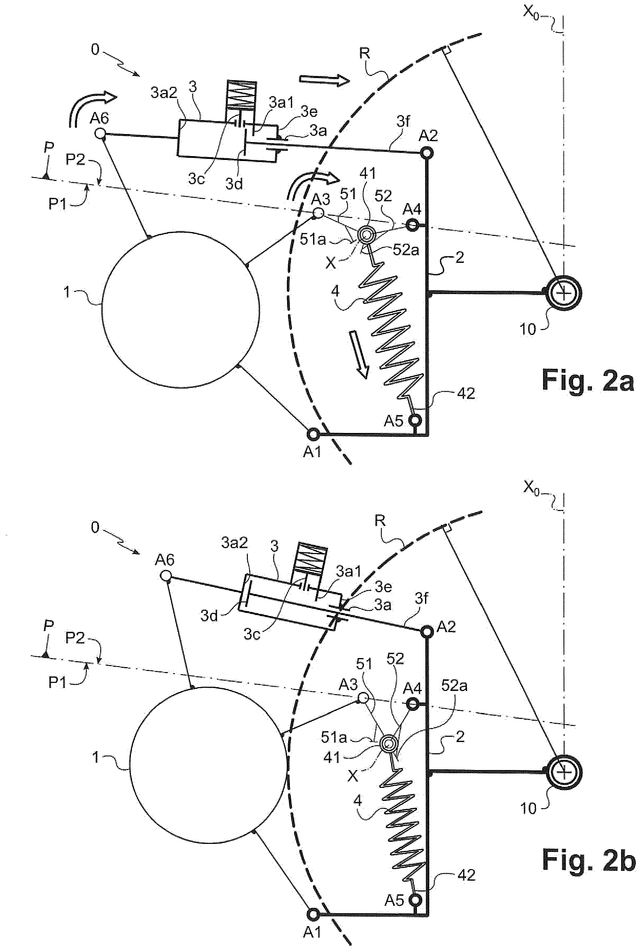

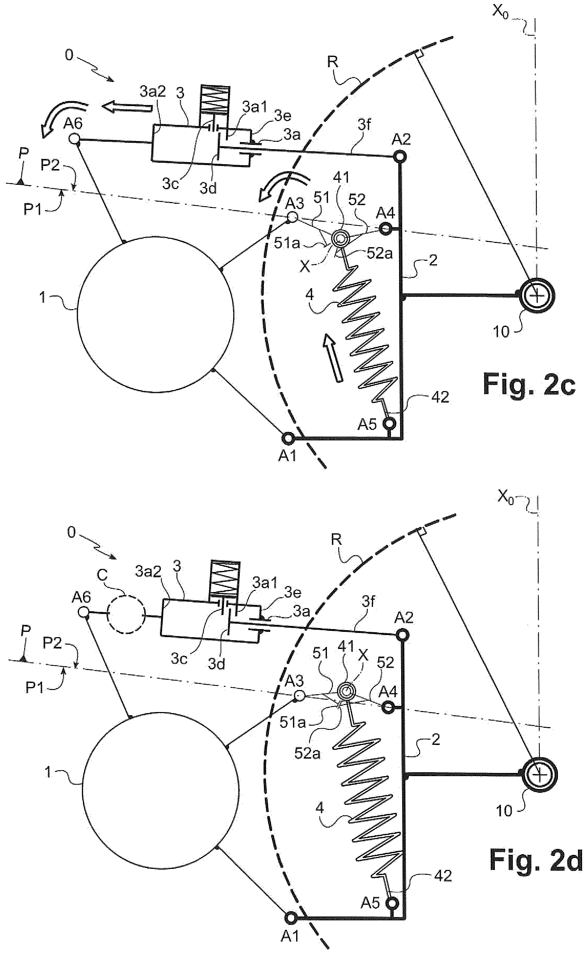

L'usage d'un moyen de rappel élastique disposé pour exercer un effort de rappel élastique du système d'entrainement de sa position embrayée vers sa position de sécurité permet :
- Dans un fonctionnement normal du train d'atterrissage, d'aider le passage du système d'entraînement de sa position embrayée vers sa position débrayée, ce qui facilite le travail du système de manoeuvre ; et
- En cas de défaut de fonctionnement du système de manoeuvre, par exemple en cas de casse mécanique C du système de manoeuvre (voir figure 2d), le moyen de rappel élastique favorise le passage du système d'entraînement vers sa position de sécurité où il est écarté de ses positions débrayée et embrayée, le risque d'embrayage accidentel avec la roue est ainsi réduit.

Les première et seconde butées définissent ensemble une position extrême de déplacement du système d'entraînement, dite position de sécurité, au-delà de laquelle le système d'entraînement ne peut aller. Par ailleurs, ces première et seconde butées sont disposées de manière que lorsque ces butées sont en contact l'une contre l'autre (c'est-à-dire lorsque le système d'entraînement est dans sa position de sécurité) tout effort exercé sur ce système d'entraînement pour le déplacer de sa position de sécurité vers sa position débrayée est contré par ces première et seconde butées qui s'opposent au passage du système d'entraînement de sa position de sécurité vers sa position débrayée.

Comme le moyen de rappel élastique exerce un effort favorisant le maintien du système d'entraînement dans cette position de sécurité avec les première et seconde butées en contact l'une contre l'autre, en cas de défaillance du système de manoeuvre, le système d'entraînement est déplacé à l'écart de sa position embrayée vers la position de sécurité et le moyen de rappel élastique s'oppose à ce que le système d'entraînement s'écarte de cette position de sécurité.

Le système d'entraînement est alors sécurisé dans sa position de sécurité d'une part grâce aux première et seconde butées en contact l'une contre l'autre et d'autre part grâce au moyen élastique de rappel qui s'oppose aussi au déplacement du système d'entraînement hors de cette position de sécurité.

Dans cette position de sécurité, le système d'entraînement ne peut plus interférer avec la roue.

Pour la compréhension de l'invention, le terme configuration extrême désigne une position extrême qui limite l'amplitude de manoeuvre possible avec le vérin.

Ainsi, l'expression « vérin manoeuvrable entre des première et seconde configurations extrêmes du vérin » signifie que la manoeuvre du vérin est limitée entre deux positions extrêmes, l'amplitude du mouvement effectué par le vérin étant ainsi limitée entre ces deux positions / configurations extrêmes.

Il est en résulte que la manoeuvre du vérin (entre ses première et seconde configurations extrêmes) permet de déplacer le système d'entraînement uniquement entre ses positions embrayée et débrayée sans jamais permettre, sous l'effet de la manoeuvre du vérin, le déplacement du système d'entraînement de sa position débrayée vers sa position de sécurité.

Ainsi, le vérin est agencé dans le train d'atterrissage pour ne déplacer le système d'entraînement qu'entre sa position débrayée et sa position embrayée, sans pouvoir déplacer le système d'entrainement entre sa position débrayée à sa position de sécurité.

Ainsi, tant que le vérin manoeuvre le système d'entraînement, celui n'est jamais déplacé entre sa position débrayée et sa position de sécurité.

A contrario, si le vérin ne permet plus de manoeuvrer le système d'entraînement, par exemple en cas de casse du vérin ou d'une des liaisons entre le système de manoeuvre et le système d'entraînement ou le support, le système d'entraînement est alors libre de se déplacer puisqu'il n'est plus déplacé sous l'effet du système de manoeuvre.

Le moyen de rappel élastique force alors le déplacement du système d'entraînement vers sa position de sécurité où il est maintenu par les première et seconde butées.

L'invention permet ainsi une mise en sécurité du système d'entraînement en cas de défaillance du système de manoeuvre.

Ceci est particulièrement avantageux puisque l'on a une sécurité à plusieurs niveaux.

En cas de défaut simple du système de manoeuvre, par exemple un défaut d'alimentation en énergie de manoeuvre du vérin, le moyen de rappel élastique force alors le déplacement du système d'entraînement vers sa position débrayée, le vérin arrivant en première configuration extrême arrête le déplacement du système d'entraînement dans la position débrayée, interdisant ainsi le passage de moyen d'entraînement de sa position débrayée vers sa position de sécurité. Dans ce cas, le déplacement du système d'entraînement vers sa position embrayée reste possible en manoeuvrant à nouveau le vérin entre ses configurations extrêmes (par exemple par alimentation du vérin en énergie de manoeuvre).

En cas de défaut important du système de manoeuvre, par exemple en cas de casse mécanique autorisant le déplacement du système de manoeuvre entre ses positions débrayée et de sécurité, alors l'effet du moyen de rappel élastique force le déplacement du système d'entraînement jusqu'à sa position de sécurité. Une fois arrivé dans cette position de sécurité du système de manoeuvre, les première et seconde butées entrent en contact l'une contre l'autre et s'opposent alors au retour du système d'entraînement vers l'une quelconque des positions débrayée ou embrayée sous l'effet d'un effort exercé sur le système d'entrainement.

Même un effort qui serait généré par le système de manoeuvre sur le système d'entraînement pour le déplacer de sa position de sécurité vers sa position débrayée est alors inopérant puisque les première et seconde butées s'opposent à ce déplacement.

On sécurise ainsi le train d'atterrissage contre une défaillance grave du système de manoeuvre.

L'invention permet aussi de ségréger les fonctions :
- de rappel élastique du moyen d'entraînement (via les moyens de rappel élastique) ;
- de manoeuvre de ce moyen d'entraînement (via le système de manoeuvre et cela tant que le vérin est manoeuvrable entre ses configurations extrêmes) ; et
- de maintien en sécurité du système d'entraînement par l'intermédiaire de la mise en contact des première et seconde butées (lorsque le vérin n'est plus manoeuvrable entre ses configurations extrêmes pour déplacer le système d'entraînement).

### BREVE DESCRIPTION DES DESSINS

L'invention sera mieux comprise à la lumière de la description qui suit d'un mode particulier de réalisation de l'invention, en référence aux figures annexées parmi lesquelles :
la figure 1 illustre une portion du train d'atterrissage selon l'invention alors que le système d'entraînement est en position débrayée ;
la figure 2a illustre le train d'atterrissage de la figure 1 alors que le système d'entraînement est déplacé de sa position débrayée vers sa position embrayée ;
la figure 2b illustre le train d'atterrissage de la figure 1 alors que le système d'entraînement est en position embrayée ;
la figure 2c illustre le train d'atterrissage de la figure 1 alors que le système d'entraînement est déplacé de sa position embrayée vers sa position débrayée ;
la figure 2d illustre le train d'atterrissage de la figure 1 alors que le système d'entraînement est dans sa position de sécurité, bloqué dans cette position sous l'effet conjugué du moyen de rappel élastique et des première et seconde butées qui sont en contact l'une contre l'autre et s'opposent au déplacement du système d'entraînement vers sa position embrayée, le vérin est ici cassé (repère C) ce qui a conduit au passage en position de sécurité ;
la figure 3 représente un train d'atterrissage selon l'invention avec une pièce de liaison sur laquelle sont respectivement articulés, en différents endroits de la pièce de liaison, le système d'entraînement à rotation de la roue, le système de manoeuvre, le moyen de rappel élastique et les première et seconde bielles.

### DESCRIPTION DETAILLEE DE L'INVENTION

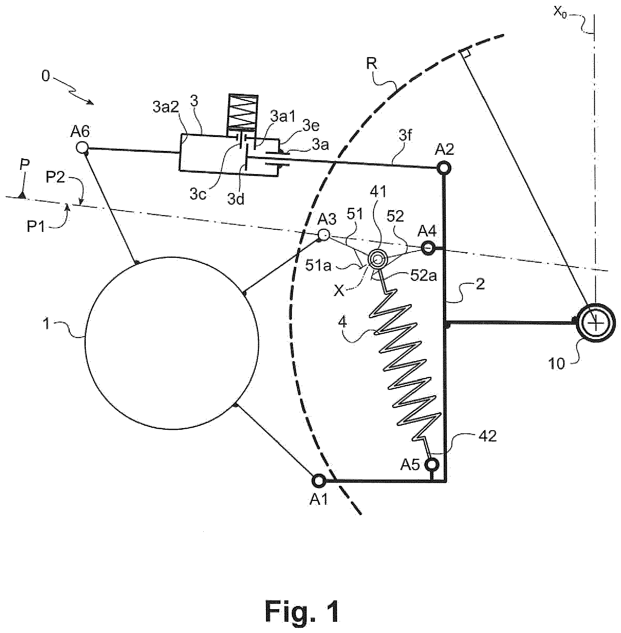

L'invention concerne un train d'atterrissage 0 pour aéronef. Ce train d'atterrissage 0 est partiellement illustré aux figures 1, 2a, 2b, 2c, 2d et 3 et comporte une jambe s'étendant suivant un axe longitudinal X0 d'extension de la jambe. Pour des raisons de clarté, la jambe n'est pas illustrée et seul son axe longitudinal X0 est schématisé.

Le train d'atterrissage 0 est relié à une structure porteuse de l'aéronef via sa jambe.

Une extrémité terminale de cette jambe porte au moins un essieu 10 autour duquel au moins une roue R pour le roulage de l'aéronef sur le sol est montée à rotation. Pour des raisons de clarté seules des portions de l'essieu 10 et de la roue R sont représentées.

La roue R est entraînée à rotation par un système d'entraînement 1 qui peut être un moteur tel qu'un moteur électrique rotatif apte à transmettre un couple d'entraînement de la roue R lorsqu'il est en position embrayée comme sur la figure 2b.

La roue R peut être reliée fixement à une couronne d'entraînement et dans ce cas, le système d'entraînement 1 en position embrayée sera en prise contre cette couronne par exemple par engrenage de dents.

Alternativement le système d'entraînement 1 peut comporter un galet venant frotter directement contre la roue pour l'entraîner à rotation.

Le système d'entraînement 1 est mobile entre une position embrayée, représentée à la figure 2b, et une position de sécurité, représentée à la figure 2d, en passant par une position débrayée représentée à la figure 1. En d'autres termes, lorsque le système d'entraînement 1 se déplace de sa position embrayée vers sa position de sécurité, et inversement, il passe obligatoirement par sa position débrayée. Cette position débrayée étant une position intermédiaire entre la position embrayée et la position de sécurité.

Un moyen de rappel élastique 4 est disposé pour exercer un effort de rappel élastique du système d'entrainement 1 de sa position embrayée vers sa position de sécurité.

Le train 0 comporte aussi un système de manoeuvre 3 relié au système d'entraînement 1 pour le déplacer entre ses positions débrayée et embrayée. Idéalement, ce système de manoeuvre 3 n'est pas adapté à déplacer le système d'entraînement au-delà de sa position débrayée, entre cette position débrayée et la position de sécurité.

Des première et seconde butées 51a, 52a sont agencées pour être écartées l'une de l'autre tant que le système d'entraînement 1 se trouve éloigné de sa position de sécurité et pour être en contact l'une contre l'autre lorsque le système d'entraînement 1 se trouve dans sa position de sécurité.

Comme illustré à la figure 2d, ces première et seconde butées 51a, 52a sont agencées pour s'opposer au passage du système d'entraînement 1 de sa position de sécurité vers sa position débrayée lorsque ces butées sont en contact l'une contre l'autre.

Ainsi, tant que le système d'entraînement 1 se trouve entre ses positions embrayée et débrayée, les butées 51a et 52a restent écartées l'une de l'autre et la manoeuvre du système d'entraînement 1 par le système de manoeuvre 3 est autorisée. En d'autres termes, tant qu'elles ne sont pas en contact l'une contre l'autre, ces première et seconde butées 51a, 52a autorisent les déplacements du système d'entraînement dont son passage vers sa position débrayée et vers sa position embrayée.

A contrario, lorsque le système d'entraînement 1 se trouve dans sa position de sécurité, les première et seconde butées sont en contact l'une contre l'autre et interdisent de manoeuvrer le système d'entraînement de sa position de sécurité vers l'une quelconque des positions débrayée ou embrayée.

Préférentiellement le système 1 selon l'invention comporte une pièce support 2 qui est liée mécaniquement à l'essieu 10 autour duquel la roue R est montée à rotation.

Cette liaison entre la pièce support 2 et l'essieu 10 est soit réalisée par assemblage de l'essieu 10 sur la pièce support 2, soit réalisée à l'aide d'une structure mécanique intermédiaire formée de plusieurs pièces intermédiaires reliant de manière rigide l'essieu 10 à la pièce support 2.

Cette pièce support 2 présente au moins une portion qui s'étend radialement vis-à-vis de l'axe X0 en allant vers l'extérieur de la jambe du train d'atterrissage.

Dans un mode de réalisation la pièce support 2 est une tige du train d'atterrissage 0 et la portion de pièce support 2 qui s'étend radialement vis-à-vis de l'axe X0 est située en partie inférieure de cette tige, la partie supérieure de la tige étant celle la plus éloignée de la roue R.

Dans un autre mode de réalisation alternatif du précédent, la pièce support 2 est une pièce distincte de la tige du train et est fixée sur cette tige via des moyens d'assemblage. Dans ce mode la pièce support est toujours située en partie inférieure de la tige.

Idéalement, le système d'entraînement de la roue 1 est monté à rotation par rapport à cette pièce support 2 par l'intermédiaire d'une première articulation A1.

Le système de manoeuvre 3 est aussi monté à rotation par rapport à cette pièce support 2 par l'intermédiaire d'une seconde articulation A2. Le système de manoeuvre est aussi monté à rotation par rapport au système d'entraînement 1 par l'intermédiaire d'une sixième articulation A6 qui est à distance de la seconde articulation A2. Le système de manoeuvre 3 s'étend majoritairement entre ces articulations A2 et A6. Dans le cas présent, ce système de manoeuvre 3 présente un vérin 3 manoeuvrable uniquement entre des première et seconde configurations extrêmes qui sont des première et seconde positions de fin de course du vérin.

Le train 0 comporte un premier arrêt mécanique 3a1, pour définir la première configuration extrême du vérin et un second arrêt mécanique 3a2 pour définir la seconde configuration extrême du vérin 3a.

Dans le cas présent ces premier et second arrêts mécaniques 3a1 et 3a2 sont portés par le vérin 3.

Dans le mode de réalisation présenté sur les figures 1 à 2d, les premier et second arrêts mécaniques 3a1, 3a2 sont disposées dans le vérin 3a. Toutefois, l'une et/ou l'autre de ces premier et second arrêts mécaniques 3a1, 3a2 pourraient aussi être formées à l'extérieur du vérin.

Un arrêt mécanique est une butée contre laquelle vient buter une autre pièce de manière à limiter un déplacement de cette autre pièce par contact avec cet arrêt mécanique. Ainsi, lorsque le vérin se déplace de sa seconde configuration extrême vers sa première configuration extrême, à son arrivée dans sa première configuration extrême le premier arrêt mécanique forme une butée interdisant le déplacement du vérin au-delà de la première configuration extrême. Inversement, lorsque le vérin se déplace de sa première configuration extrême vers sa seconde configuration extrême, à son arrivée dans sa seconde configuration extrême le second arrêt mécanique forme une butée interdisant le déplacement du vérin au-delà de sa seconde configuration extrême.

Le vérin est ainsi manoeuvrable uniquement entre ses première et seconde configurations extrêmes et n'est plus manoeuvrable au-delà de ces première et seconde configurations extrêmes.

Le vérin comporte aussi une chemise 3e et une pièce 3d mobile à l'intérieur de cette chemise 3e tout au long de la manoeuvre du vérin entre ses première et seconde configurations extrêmes. En d'autres termes, toute manoeuvre du vérin entre ses configurations extrêmes s'accompagne d'un déplacement de la pièce mobile et inversement tout déplacement de la pièce mobile s'associe à une manoeuvre du vérin entre ses configurations extrêmes.

La première butée 3a1 est placée pour limiter la course de la pièce mobile 3d lorsque le vérin arrive dans sa première configuration extrême, cette première butée étant alors en appui contre un premier côté de la pièce mobile 3d.

La seconde butée 3a2 est placée pour limiter la course de la pièce mobile 3d lorsque le vérin arrive dans sa seconde configuration extrême, cette seconde butée 3a2 étant alors en appui contre un second côté de la pièce mobile 3d.

Les premier et second côtés de la pièce mobile 3d sont placés de part et d'autre de la pièce mobile 3d qui est ici un piston relié à une tige de piston 3f.

L'extrémité de cette tige 3f est reliée à la pièce support 2 par l'intermédiaire de la seconde articulation A2 pour ainsi monter à rotation le système de manoeuvre 3 par rapport à cette pièce support 2.

Le train 0 comporte aussi des mécanismes de verrouillage 3c mobiles entre une configuration déverrouillée et une configuration verrouillée. Préférentiellement ces mécanismes de verrouillage 3c sont portés par le vérin.

Ces mécanismes de verrouillage 3c en configuration déverrouillée autorisent le déplacement du vérin entre ses première et seconde configurations extrêmes et ces mécanismes de verrouillage 3c en configuration verrouillée immobilisant le vérin 3a dans sa première configuration extrême en interdisant sa manoeuvre de sa première configuration extrême vers sa seconde configuration extrême.

Les mécanismes de verrouillage 3c sont agencés pour passer de la configuration déverrouillée à la configuration verrouillée lorsque le vérin arrive dans sa première configuration extrême.

Préférentiellement, les mécanismes de verrouillage 3c présentent une portion de détection pour détecter automatiquement l'arrivée du vérin dans sa première position et automatiquement passer de la configuration déverrouillée à la configuration verrouillée.

Cette portion de détection peut être, par exemple, un doigt poussé par une pièce mobile du vérin lorsqu'il arrive dans sa première configuration, ce doigt, lorsque poussé entrainant le déplacement des mécanismes de verrouillage 3c en configuration verrouillée. Les mécanismes de verrouillage peuvent aussi comporter un ressort exerçant alors un effort sur certaines pièces du mécanisme de verrouillage pour maintenir la configuration verrouillée.

Les mécanismes de verrouillage 3c sont préférentiellement agencés pour passer de la configuration verrouillée à la configuration déverrouillée sous l'effet de l'alimentation d'une chambre du vérin avec un fluide hydraulique ayant une pression supérieure à un seuil de pression minimum prédéterminé.

De manière similaire si le vérin est un vérin électromécanique, les mécanismes de verrouillage 3c peuvent être agencés pour passer de la configuration verrouillée à la configuration déverrouillée sous l'effet de l'alimentation électrique du vérin avec une puissance électrique seuil minimale prédéterminée.

Les mécanismes de verrouillage 3c comportent des griffes ou des segments qui adoptent des positions distinctes par rapport à la chemise du vérin 3e lorsque les mécanismes de verrouillage sont déplacés entre la configuration déverrouillée et la configuration verrouillée.

Ces griffes ou ces segments sont en prise mécanique avec ladite pièce mobile 3d du vérin pour interdire le déplacement de cette pièce mobile 3d par rapport à la chemise 3e lorsque le vérin est dans sa première configuration extrême et que les mécanismes de verrouillage 3c sont dans la configuration verrouillée. Le vérin est alors immobilisé par les griffes ou segments des mécanismes de verrouillage dans sa première configuration extrême.

Ces griffes ou ces segments sont écartés de ladite pièce mobile 3d du vérin pour autoriser le déplacement de cette pièce mobile 3d par rapport à la chemise 3e lorsque les mécanismes de verrouillage 3c sont dans la configuration déverrouillée. Le vérin est alors manoeuvrable entre ses première et seconde configurations extrêmes.

En outre, le train d'atterrissage comporte des première et seconde bielles 51, 52 articulées entre elles autour d'un axe d'articulation des bielles X. La première bielle 51 est articulée par rapport au système d'entraînement 1 par l'intermédiaire d'une troisième articulation A3. La seconde bielle 52 est articulée par rapport à la pièce support 2 par l'intermédiaire d'une quatrième articulation A4.

La première butée 51a est positionnée sur la première bielle 51 et la seconde butée 52a est positionnée sur la seconde bielle 52.

La position limite de déplacement du système d'entraînement, c'est-à-dire la position de sécurité atteinte à la figure 2d, est ainsi définie simplement à l'aide des butées portées par les bielles 51, 52, ces bielles ayant une fonction renforcement de la liaison mécanique entre le système d'entraînement 1 et la pièce support 2.

Le moyen de rappel élastique 4 s'étend entre des première et seconde extrémités 41, 42 du moyen de rappel élastique 4. La première extrémité 41 du moyen élastique 4 est montée à rotation par rapport auxdites première et seconde bielles 51, 52 au niveau dudit axe d'articulation de ces bielles X.

La seconde extrémité 42 du moyen de rappel élastique 4 est montée à rotation par rapport à la pièce support 2 par l'intermédiaire d'une cinquième articulation A5.

Comme illustré sur les figures 1 à 3, les première, seconde, quatrième et cinquième articulations A1, A2, A4, A5 sont disposées en différents emplacements de la pièce support 2, ces différents emplacements étant écartés les uns des autres.

On obtient ainsi une structure déformable permettant de transmettre au système d'entraînement 1 :
- une force élastique, via un simple axe d'articulation des bielles X ; et
- un effort de manoeuvre via le système de manoeuvre 3 relié d'une part à la pièce support via l'articulation A2 et d'autre part au système d'entraînement 1 via l'articulation A6.

Ce mécanisme constitué par des deux bielles articulées entre elles suivant l'axe X peut être utilisé pour amplifier la force élastique transmise au système d'entraînement 1 par rapport à la force effectivement générée par le moyen de rappel élastique sur l'axe d'articulation X. En effet, plus les bielles se rapprochent d'une position d'alignement dans un même plan P des troisième et quatrième articulations A3, A4 avec l'axe d'articulation des bielles X et plus la force transmise par ces bielles sur le système d'entraînement 1 pour le forcer vers sa position de sécurité est amplifiée par rapport à l'effort élastique généré sur l'axe X par le moyen de rappel élastique. Cette amplification de l'effort est favorable au passage du vérin de sa seconde configuration extrême vers sa première configuration extrême.

Les troisième et quatrième articulations A3, A4 sont respectivement formées par des axes de pivotement parallèles entre eux qui s'étendent longitudinalement dans un plan P.

Les autres articulations, en l'occurrence les première, seconde, cinquième, sixième articulations A1, A2, A5, A6 et l'axe d'articulation des bielles X sont respectivement formés par des axes de pivotement. Tous ces axes de pivotement des articulations A1, A2, A3, A4, A5, A6 et de l'axe d'articulation des bielles X sont parallèles entre eux.

Idéalement, l'axe d'articulation des bielles X est disposé pour se trouver en vis-à-vis d'une première face P1 d'un plan P passant par les troisième et quatrième articulations A3, A4 lorsque le système d'entraînement 1 se trouve dans sa position débrayées (voir figure 1) et pour se trouver en vis-à-vis d'une seconde face P2 de ce plan P lorsque le système d'entraînement 1 se trouve dans sa position de sécurité (voir figure 2d).

En d'autres termes, lors du passage du système d'entraînement 1 de sa position de sécurité vers sa position débrayée, ou inversement de sa position débrayée vers sa position de sécurité, il y a un moment où l'axe d'articulation X se trouve dans le plan P qui passe par les troisième A3 et quatrième articulations A4. Ces troisième et quatrième articulations A3, A4 sont alors alignées avec l'axe d'articulation X. On note que ce plan P se déplace avec ces troisième et quatrième articulations A3, A4.

Lorsque le système d'entraînement 1 passe de sa position débrayée vers sa position de sécurité, les bielles 51, 52 se déplacent l'une par rapport à l'autre de manière à rapprocher les butées 51a, 52a l'une de l'autre jusqu'à ce que ces butées 51a, 52a se touchent. Le système d'entraînement est alors dans sa position de sécurité illustrée à la figure 2d.

Ainsi, lorsque le système d'entraînement 1 se déplace de sa position débrayée (figure 2c) vers sa position de sécurité (figure 2d), à son arrivée dans cette position de sécurité, il se trouve bloqué par les butées 51a, 52a qui lui interdisent d'aller au-delà de cette position de sécurité.

Ces première et seconde bielles 51, 52 et les butées 51a, 52a forment, avec l'axe d'articulation X des bielles, une genouillère.

Lorsque le système d'entraînement 1 passe de sa position débrayée vers sa position embrayée, les bielles 51, 52 se déplacent l'une par rapport à l'autre, par pivotement autour de l'axe X, de manière à ce que les butées 51a, 52a s'écartent l'une de l'autre. Ces butées 51a, 52a autorisent ainsi le passage du système d'entraînement de la position débrayée vers la position embrayée.

Comme le moyen de rappel élastique 4 exerce un effort élastique qui favorise le passage du système d'entraînement 1 de sa position débrayée vers sa position de sécurité, en cas de rupture du système de manoeuvre 3, le système d'entraînement 1 est forcé à passer vers sa position de sécurité. Cette position de sécurité est atteinte lorsque les butées 51a, 52a entrent en contact l'une contre l'autre et interdisent le déplacement du système d'entraînement 1 au-delà de cette position de sécurité.

Comme expliqué précédemment, l'agencement en genouillère des bielles 51, 52 et des butées 51a, 52a fait que tout effort exercé sur le système d'entraînement 1 pour le déplacer de sa position de sécurité vers sa position débrayée génère un effort opposé sur les butées. Ainsi, même si l'on arrivait à exercer un effort sur le système d'entraînement 1 pour le déplacer de sa position de sécurité vers sa position débrayée, les butées on alors tendance à être comprimées l'une contre l'autre et elles interdisent avec les bielles ce déplacement du système d'entraînement 1 hors de sa position de sécurité vers sa position débrayée.

Le système d'entraînement 1 reste ainsi verrouillé dans sa position de sécurité par l'appui des butées 51a, 52a l'une contre l'autre.

Pour faire passer le système d'entraînement 1 de sa position de sécurité vers sa position débrayée, il faut alors réaliser une opération de maintenance au sol.

Par exemple, cette opération de maintenance peut consister à forcer le déplacement des bielles 51, 52 en allant à l'encontre des moyens de rappel élastique 4 pour que l'axe d'articulation X se déplace de l'autre côté du plan P et se retrouve en vis-à-vis de la première face P1 du plan P.

Cette opération de maintenance peut aussi consister à démonter les moyens élastiques de rappel 4 et le vérin que l'on sait être probablement endommagé car il a été forcé en dehors de la plage où il est manoeuvrable, en allant au-delà de sa première configuration extrême, dans une plage du vérin où il n'est pas manoeuvrable.

L'effort de rappel élastique exercé à l'aide des moyens de rappel élastique 4 sur l'axe d'articulation X alors que le système d'entraînement 1 se trouve dans sa position de sécurité permet de forcer le contact entre ces butées 51a, 52a. Ceci favorise le maintien du système d'entraînement 1 dans sa position de sécurité.

Seul un effort exercé, sur le moyen de rappel élastique 4, pour aller à l'encontre de l'effort de rappel élastique permet le déplacement de l'axe d'articulation des bielles X vis-à-vis de la pièce support 2 et l'écartement des butées 51a, 52a l'une de l'autre. Le système d'entraînement 1 peut alors s'écarter de sa position de sécurité (figure 2d) et se déplacer vers sa position débrayée (figure 1).

En cas de rupture du système de manoeuvre 3, le moyen de rappel élastique 4 force le passage du système d'entraînement 1 vers sa position de sécurité dans laquelle il est maintenu. Le risque que le système d'entraînement 1 vienne accidentellement en prise mécanique avec la roue est ainsi minimisé.

Typiquement, le système de manoeuvre 3 comporte un vérin 3a manoeuvrable entre des première et seconde configurations extrêmes du vérin 3a. Ce vérin 3a est agencé pour que lorsqu'il se trouve dans sa première configuration extrême, le système d'entraînement 1 soit alors maintenu par le vérin 3a dans sa position débrayée et pour que lorsque ce vérin 3a se trouve dans sa deuxième configuration extrême, le système d'entraînement 1 soit alors maintenu par ce vérin 3a dans sa position embrayée.

Ainsi, en fonctionnement normal, le vérin permet uniquement de déplacer le système d'entraînement 1 entre ses positions embrayée et débrayée, sans jamais autoriser le déplacement vers la position de sécurité qui est atteinte uniquement en cas de disfonctionnement du système de manoeuvre (par exemple rupture du vérin ou d'une attache du vérin).

Dans l'exemple présenté sur les figures 1 à 3, le vérin 3a est un vérin télescopique de type hydraulique ou électrique.

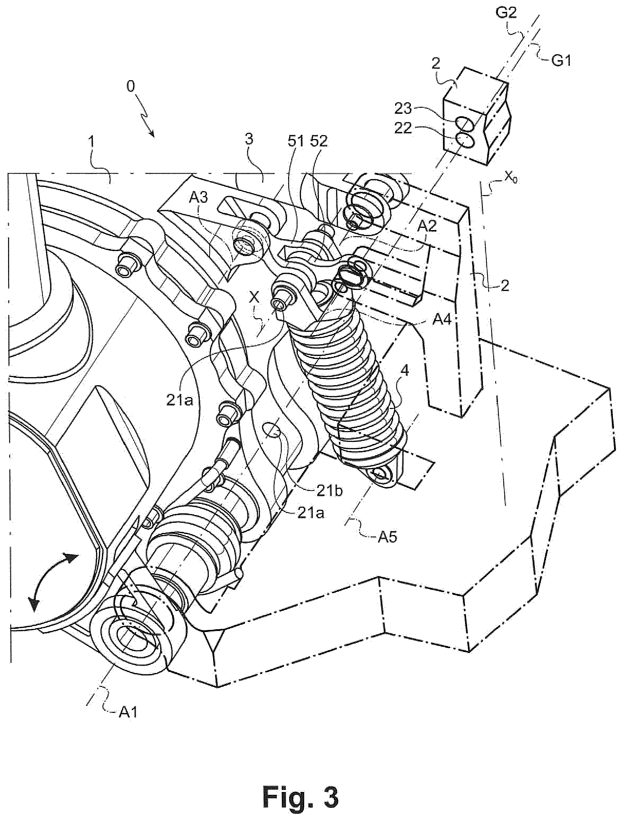

Comme schématisé sur la figure 3, des première et seconde perforations 21a, 22 sont disposées pour être en alignement l'une par rapport à l'autre lorsque le système d'entraînement 1 se trouve en position débrayée et pour permettre le passage d'une goupille par ces première et seconde perforations 21a, 22 ainsi alignées. Ceci permet de maintenir le système d'entraînement 1 dans sa position débrayée en insérant une goupille. On peut ainsi sécuriser la position débrayée pour, par exemple, désactiver la fonction d'entraînement à rotation de la roue. Ceci est utile lors des opérations de maintenance au sol.

Ici la goupille (non représentée) s'étend selon l'axe G1 et passe par les première et seconde perforations 21a, 22 pour immobiliser le système d'entraînement 1 en position débrayée.

Le train 0 peut aussi comporter des troisième 21b et quatrième perforations 23 disposées pour être en alignement l'une par rapport à l'autre lorsque le système d'entraînement 1 est en position de sécurité et pour permettre le passage d'une goupille par ces troisième et quatrième perforations 21b, 23 ainsi alignées. Ceci permet de maintenir le système d'entraînement 1 dans sa position de sécurité.

Idéalement, comme illustré à la figure 3, les première et troisième perforations 21a, 21b sont formées sur le système d'entraînement 1, ces première et troisième perforations 21a, 21b pouvant être confondues en une seule et même perforation.

Les seconde et quatrième perforations 22, 23 peuvent être formées au travers de la pièce support 2 ou au travers d'une autre pièce montée sur la pièce support.

Idéalement, la goupille est conformée pour pouvoir passer au travers des première et seconde perforations 21a, 22 et maintenir le système d'entraînement 1 en position débrayée, et pouvoir passer au travers des troisième et quatrième perforations 21b, 23 pour maintenir le système d'entraînement 1 dans sa position de sécurité.

D'autres perforations peuvent être réalisées pour permettre le passage de la goupille dans deux portions distinctes du train et immobiliser le système d'entraînement dans sa position embrayée.

## Revendications

1. Train d'atterrissage pour aéronef (0) comportant :
- au moins une roue (R) pour le roulage de l'aéronef sur le sol ;
- un système d'entraînement (1) à rotation de la roue mobile entre une position embrayée vis-à-vis de la roue (R) et une position de sécurité dans laquelle ce système d'entraînement à rotation de la roue est désengagé de la roue en passant par une position débrayée vis-à-vis de la roue ;
- un système de manoeuvre (3) relié au système d'entraînement (1) pour le déplacer entre sa position débrayée et sa position embrayée ;
**caractérisé en ce que** le système de manoeuvre comporte un vérin (3a) manoeuvrable entre des première et seconde configurations extrêmes du vérin (3a), ce vérin étant agencé pour que lorsqu'il se trouve dans sa première configuration extrême, le système d'entraînement (1) soit alors maintenu par ce vérin (3a) dans sa position débrayée et pour que lorsque ce vérin (3a) se trouve dans sa seconde configuration extrême, le système d'entraînement (1) soit alors maintenu par ce vérin (3a) dans sa position embrayée, le train d'atterrissage comportant en outre :
- un moyen de rappel élastique (4) disposé pour exercer un effort de rappel élastique du système d'entrainement (1) vers sa position de sécurité; et
- des première et seconde butées (51a, 52a) agencées pour être écartées l'une de l'autre tant que le système d'entraînement (1) se trouve éloigné de sa position de sécurité et pour être en contact l'une contre l'autre lorsque le système d'entraînement (1) se trouve dans sa position de sécurité, ces première et seconde butées (51a, 52a) étant agencées pour que lorsque ces butées sont en contact l'une contre l'autre et qu'un effort est exercé sur le système d'entraînement (1) pour le déplacer de sa position de sécurité vers sa position débrayée, ces butées s'opposent au passage du système d'entraînement (1) de sa position de sécurité vers sa position débrayée.

2. Train d'atterrissage d'aéronef (0) selon la revendication 1, comportant une pièce support (2), le système d'entraînement de la roue (1) étant monté à rotation par rapport à cette pièce support (2) par l'intermédiaire d'une première articulation (A1), le système de manoeuvre (3) étant monté à rotation par rapport à cette pièce support (2) par l'intermédiaire d'une seconde articulation (A2), le train d'atterrissage comportant des première et seconde bielles (51, 52) articulées entre elles autour d'un axe d'articulation des bielles (X), la première bielle (51) étant également articulée par rapport au système d'entraînement (1) par l'intermédiaire d'une troisième articulation (A3), la seconde bielle (52) étant également articulée par rapport à la pièce support (2) par l'intermédiaire d'une quatrième articulation (A4), la première butée (51a) étant positionnée sur la première bielle (51) et la seconde butée (52a) étant positionnée sur la seconde bielle (52).

3. Train d'atterrissage (0) selon la revendication précédente, dans lequel le moyen de rappel élastique (4) s'étend entre des première et seconde extrémités (41, 42) du moyen de rappel élastique, la première extrémité (41) du moyen de rappel élastique (4) étant montée à rotation par rapport auxdites première et seconde bielles (51, 52) au niveau dudit axe d'articulation de ces bielles (X), la seconde extrémité (42) du moyen de rappel élastique (4) étant montée à rotation par rapport à la pièce support (2) par l'intermédiaire d'une cinquième articulation (A5), les première, seconde, quatrième et cinquième articulations (A1, A2, A4, A5) étant disposées en différents emplacements de la pièce support (2) qui sont écartés les uns des autres.

4. Train d'atterrissage (0) selon l'une quelconque des revendications 2 ou 3, dans lequel ledit axe d'articulation des bielles (X) est disposé pour se trouver en vis-à-vis d'une première face (P1) d'un plan (P) passant par les troisième et quatrième articulations (A3, A4) lorsque le système d'entraînement (1) se trouve dans sa position débrayée et pour se trouver en vis-à-vis d'une seconde face (P2) de ce plan (P) lorsque le système d'entraînement (1) se trouve dans sa position de sécurité.

5. Train d'atterrissage (0) selon l'une quelconque des revendications 2 à 4, dans lequel le système de manoeuvre (3) qui est monté à rotation par rapport à la pièce support (2) par l'intermédiaire de la seconde articulation (A2) est aussi monté à rotation par rapport au système d'entraînement (1) par l'intermédiaire d'une sixième articulation (A6) qui est à distance de la seconde articulation (A2).

6. Train d'atterrissage (0) selon l'une quelconque des revendications 1 à 5, dans lequel le vérin (3a) est un vérin télescopique de type hydraulique ou électrique.

7. Train d'atterrissage (0) selon l'une quelconque des revendications précédentes, comportant des première et seconde perforations (21a, 22) disposées pour être en alignement l'une par rapport à l'autre lorsque le système d'entraînement (1) est en position débrayée et pour permettre le passage d'une goupille par ces première et seconde perforations (21a, 22) ainsi alignées pour maintenir le système d'entraînement (1) dans sa position débrayée.

8. Train d'atterrissage (0) selon l'une quelconque des revendications précédentes, comportant des troisième (21b) et quatrième perforations (23) disposées pour être en alignement l'une par rapport à l'autre lorsque le système d'entraînement (1) est en position de sécurité et pour permettre le passage d'une goupille par ces troisième et quatrième perforations (21b, 23) ainsi alignées pour maintenir le système d'entraînement (1) dans sa position de sécurité.

9. Train d'atterrissage (0) selon l'une quelconque des revendications 1 à 8, comportant :
- un premier arrêt mécanique (3a1) pour définir la première configuration extrême du vérin ; et
- des mécanismes de verrouillage (3c) mobiles entre une configuration déverrouillée et une configuration verrouillée ;
ces mécanismes de verrouillage (3c) en configuration déverrouillée autorisant le déplacement du vérin entre ses première et seconde configurations extrêmes et ces mécanismes de verrouillage (3c) en configuration verrouillée immobilisant le vérin (3a) dans sa première configuration extrême en interdisant sa manoeuvre de sa première configuration extrême vers sa seconde configuration extrême.

10. Train d'atterrissage (0) selon la revendication 9, dans lequel les mécanismes de verrouillage sont agencés pour passer de la configuration déverrouillée à la configuration verrouillée lorsque le vérin arrive dans sa première configuration extrême.

11. Train d'atterrissage (0) selon la revendication 10 dans lequel le vérin porte les mécanismes de verrouillage.

12. Train d'atterrissage (0) selon la revendication 11 dans lequel :
- le vérin comporte une chemise (3e) et une pièce (3d) mobile à l'intérieur de cette chemise (3e) tout au long de la manoeuvre du vérin entre ses première et seconde configurations extrêmes ;
- les mécanismes de verrouillage comportent des griffes ou des segments qui adoptent des positions distinctes par rapport à la chemise du vérin lorsque les mécanismes de verrouillage sont déplacés entre la configuration déverrouillée et la configuration verrouillée ;
- ces griffes ou ces segments étant en prise mécanique avec ladite pièce mobile (3d) du vérin pour interdire le déplacement de cette pièce mobile (3d) par rapport à la chemise (3e) lorsque le vérin est dans sa première configuration extrême et que les mécanismes de verrouillage (3c) sont dans la configuration verrouillée, le vérin étant alors immobilisé par les griffes ou segments des mécanismes de verrouillage dans sa première configuration extrême ; et
- ces griffes ou ces segments étant écartés de ladite pièce mobile (3d) du vérin pour autoriser le déplacement de cette pièce mobile (3d) par rapport à la chemise (3e) lorsque les mécanismes de verrouillage (3c) sont dans la configuration déverrouillée, le vérin étant alors manoeuvrable entre ses première et seconde configurations extrêmes.

13. Train d'atterrissage (0) selon l'une quelconque des revendications 10 à 12, dans lequel les mécanismes de verrouillage sont agencés pour passer de la configuration verrouillée à la configuration déverrouillée sous l'effet d'une alimentation d'une chambre du vérin avec un fluide hydraulique ayant une pression supérieure à un seuil de pression minimum prédéterminé.

14. Train d'atterrissage (0) selon l'une quelconque des revendications 1 à 13, comportant un second arrêt mécanique (3a2) pour définir la seconde configuration extrême du vérin (3a), ce second arrêt mécanique étant porté par le vérin (3a).

## Patentansprüche

1. Fahrwerk (0) für ein Luftfahrzeug, umfassend:
- mindestens ein Rad (R) für das Rollen des Luftfahrzeugs auf dem Boden;
- ein Antriebssystem (1) zum Drehantrieb des Rades, wobei das System zwischen einer in Bezug auf das Rad (R) eingerückten Position und einer Sicherheitsposition, in der dieses Antriebssystem zum Drehantrieb des Rades nicht mit dem Rad in Eingriff steht, beweglich ist und dabei durch eine in Bezug auf das Rad ausgerückte Position hindurchgeht;
- ein Verstellsystem (3), das mit dem Antriebssystem (1) verbunden ist, um dieses zwischen seiner ausgerückten Position und seiner eingerückten Position zu verstellen;
**dadurch gekennzeichnet, dass** das Verstellsystem einen Zylinder (3a) umfasst, der zwischen einer ersten und einer zweiten Endkonfiguration des Zylinders (3a) bewegbar ist, wobei dieser Zylinder derart ausgebildet ist, dass, wenn er sich in seiner ersten Endkonfiguration befindet, das Antriebssystem (1) dann von diesem Zylinder (3a) in seiner ausgerückten Position gehalten wird, und dass, wenn sich dieser Zylinder (3a) in seiner zweiten Endkonfiguration befindet, das Antriebssystem (1) dann von diesem Zylinder (3a) in seiner eingerückten Position gehalten wird, wobei das Fahrwerk ferner umfasst:
- elastische Rückstellmittel (4), die angeordnet sind, um eine elastische Rückstellkraft auf das Antriebssystem (1) in Richtung seiner Sicherheitsposition auszuüben; und
- einen ersten und einen zweiten Anschlag (51a, 52a), die ausgebildet sind, um zueinander beabstandet zu sein, wenn das Antriebssystem (1) von seiner Sicherheitsposition entfernt ist, und um in Kontakt miteinander zu sein, wenn sich das Antriebssystem (1) in seiner Sicherheitsposition befindet, wobei dieser erste und dieser zweite Anschlag (51a, 52a) derart ausgebildet sind, dass, wenn diese Anschläge miteinander in Kontakt sind und wenn eine Kraft auf das Antriebssystem (1) ausgeübt wird, um es von seiner Sicherheitsposition in seine ausgerückte Position zu bewegen, sich diese Anschläge dem Übergang des Antriebssystems (1) von seiner Sicherheitsposition in seine ausgerückte Position widersetzen.

2. Luftfahrzeugfahrwerk (0) nach Anspruch 1, umfassend ein Trägerteil (2), wobei das Antriebssystem (1) zum Antrieb des Rades in Bezug auf dieses Trägerteil (2) über eine erste Gelenkverbindung (A1) drehbar gelagert ist, wobei das Verstellsystem (3) in Bezug auf dieses Trägerteil (2) über eine zweite Gelenkverbindung (A2) drehbar gelagert ist, wobei das Fahrwerk eine erste und eine zweite Stange (51, 52) umfasst, die aneinander um eine Stangengelenkverbindungsachse (X) angelenkt sind, wobei die erste Stange (51) ferner in Bezug auf das Antriebssystem (1) über eine dritte Gelenkverbindung (A3) angelenkt ist, wobei die zweite Stange (52) ferner in Bezug auf das Trägerteil (2) über eine vierte Gelenkverbindung (A4) angelenkt ist, wobei der erste Anschlag (51a) auf der ersten Stange (51) positioniert und der zweite Anschlag (52a) auf der zweiten Stange (52) positioniert ist.

3. Fahrwerk (0) nach dem vorhergehenden Anspruch, bei dem sich die elastischen Rückstellmittel (4) zwischen einem ersten und einem zweiten Ende (41, 42) der elastischen Rückstellmittel erstrecken, wobei das erste Ende (41) der elastischen Rückstellmittel (4) in Bezug auf die genannte erste und zweite Stange (51, 52) im Bereich der genannten Gelenkverbindungsache (X) dieser Stangen drehbar gelagert ist, wobei das zweite Ende (42) der elastischen Rückstellmittel (4) in Bezug auf das Trägerteil (2) über eine fünfte Gelenkverbindung (A5) drehbar gelagert ist, wobei die erste, die zweite, die vierte und die fünfte Gelenkverbindung (A1, A2, A4, A5) an verschiedenen Stellen des Trägerteils (2) angeordnet sind, die zueinander beabstandet sind.

4. Fahrwerk (0) nach einem der Ansprüche 2 oder 3, bei dem die genannte Gelenkverbindungsachse (X) der Stangen angeordnet ist, um sich gegenüber einer ersten Fläche (P1) einer Ebene (P) zu befinden, die durch die dritte und die vierte Gelenkverbindung (A3, A4) geht, wenn sich das Antriebssystem (1) in seiner ausgerückten Position befindet, und um sich gegenüber einer zweiten Fläche (P2) dieser Ebene (P) zu befinden, wenn sich das Antriebssystem (1) in seiner Sicherheitsposition befindet.

5. Fahrwerk (0) nach einem der Ansprüche 2 bis 4, bei dem das Verstellsystem (3), das in Bezug auf das Trägerteil (2) über die zweite Gelenkverbindung (A2) drehbar gelagert ist, ferner in Bezug auf das Antriebssystem (1) über eine sechste Gelenkverbindung (A6) drehbar gelagert ist, die einen Abstand zur zweiten Gelenkverbindung (A2) hat.

6. Fahrwerk (0) nach einem der Ansprüche 1 bis 5, bei dem der Zylinder (3a) ein Teleskopzylinder hydraulischer oder elektrischer Art ist.

7. Fahrwerk (0) nach einem der vorhergehenden Ansprüche, umfassend ein erstes und ein zweites Loch (21a, 22), die angeordnet sind, um relativ zueinander ausgerichtet zu sein, wenn das Antriebssystem (1) in der ausgerückten Position ist, und um den Durchtritt eines Stiftes durch dieses erste und zweite Loch (21a, 22), die so ausgerichtet sind, zu gestatten, um das Antriebssystem (1) in seiner ausgerückten Position zu halten.

8. Fahrwerk (0) nach einem der vorhergehenden Ansprüche, umfassend ein drittes (21b) und ein viertes Loch (23), die angeordnet sind, um relativ zueinander ausgerichtet zu sein, wenn das Antriebssystem (1) in der Sicherheitsposition ist, und um den Durchtritt eines Stiftes durch dieses dritte und vierte Loch (21b, 23), die so ausgerichtet sind, zu gestatten, um das Antriebssystem (1) in seiner Sicherheitsposition zu halten.

9. Fahrwerk (0) nach einem der Ansprüche 1 bis 8, umfassend:
- einen ersten mechanischen Anschlag (3a1), um die erste Endkonfiguration des Zylinders zu definieren; und
- Verriegelungsmechanismen (3c), die zwischen einer entriegelten Konfiguration und einer verriegelten Konfiguration beweglich sind;
wobei diese Verriegelungsmechanismen (3c) in der entriegelten Konfiguration die Verschiebung des Zylinders zwischen seiner ersten und zweiten Endkonfiguration gestatten und diese Verriegelungsmechanismen (3c) in der verriegelten Konfiguration den Zylinder (3a) in seiner ersten Endkonfiguration blockieren, indem sie seine Bewegung von seiner ersten Endkonfiguration in seine zweite Endkonfiguration verhindern.

10. Fahrwerk (0) nach Anspruch 9, bei dem die Verriegelungsmechanismen ausgebildet sind, um von der entriegelten Konfiguration in die verriegelte Konfiguration überzugehen, wenn der Zylinder in seiner ersten Endkonfiguration ankommt.

11. Fahrwerk (0) nach Anspruch 10, bei dem der Zylinder die Verriegelungsmechanismen trägt.

12. Fahrwerk (0) nach Anspruch 11, bei dem:
- der Zylinder einen Mantel (3e) und ein Teil (3d) umfasst, das im Inneren dieses Mantels (3e) während der gesamten Bewegung des Zylinders zwischen dessen erster und dessen zweiter Endkonfiguration beweglich ist;
- die Verriegelungsmechanismen Klauen oder Segmente umfassen, die verschiedene Positionen in Bezug auf den Mantel des Zylinders einnehmen, wenn die Verriegelungsmechanismen zwischen der entriegelten Konfiguration und der verriegelten Konfiguration verschoben werden;
- wobei diese Klauen oder diese Segmente in mechanischem Eingriff mit dem genannten beweglichen Teil (3d) des Zylinders stehen, um die Verschiebung dieses beweglichen Teils (3d) in Bezug auf den Mantel (3e) zu verhindern, wenn der Zylinder in seiner ersten Endkonfiguration ist und wenn die Verriegelungsmechanismen (3c) in der verriegelten Konfiguration sind, wobei der Zylinder dann durch die Klauen oder Segmente der Verriegelungsmechanismen in seiner ersten Endkonfiguration immobilisiert wird; und
- wobei diese Klauen oder diese Segmente zu dem genannten beweglichen Teil (3d) des Zylinders beabstandet sind, um die Verschiebung dieses beweglichen Teils (3d) in Bezug auf den Mantel (3e) zu gestatten, wenn die Verriegelungsmechanismen (3c) in der entriegelten Konfiguration sind, wobei der Zylinder dann zwischen seiner ersten und seiner zweiten Endkonfiguration bewegbar ist.

13. Fahrwerk (0) nach einem der Ansprüche 10 bis 12, bei dem die Verriegelungsmechanismen ausgebildet sind, um von der verriegelten Konfiguration in die entriegelte Konfiguration unter der Wirkung einer Versorgung einer Kammer des Zylinders mit einem Hydraulikfluid überzugehen, das einen Druck hat, der höher als ein vorbestimmter minimaler Druckschwellwert ist.

14. Fahrwerk (0) nach einem der Ansprüche 1 bis 13, umfassend einen zweiten mechanischen Anschlag (3a2), um die zweite Endkonfiguration des Zylinders (3a) zu definieren, wobei dieser zweite mechanische Anschlag von dem Zylinder (3a) getragen wird.

## Claims

1. Landing gear (0) for aircraft comprising:
- at least one wheel (R) for the taxiing of the aircraft on the ground;
- a system (1) for rotationally driving the wheel that is mobile between a clutched position with respect to the wheel (R) and a safety position by passing through a declutched position with respect to the wheel;
- a manoeuvring system (3) linked to the driving system (1) to displace it between its declutched and clutched positions;
**characterized in that** the manoeuvring system comprises an actuator (3a) that can be manoeuvred between first and second extreme configurations of the actuator (3a), this actuator being arranged so that, when it is in its first extreme configuration, the driving system (1) is then held by this actuator (3a) in its declutched position and so that, when this actuator (3a) is in its second extreme configuration, the driving system (1) is then held by this actuator (3a) in its clutched position, the landing gear further comprising :
- an elastic return means (4) arranged to exert an elastic return load on the driving system (1) towards its safety position; and
- first and second abutments (51a, 52a) arranged to be separated from one another as long as the driving system (1) is away from its safety position and to be in contact with one another when the driving system (1) is in its safety position, these first and second abutments (51a, 52a) being arranged so that, when these abutments are in contact with one another and a load is exerted on the driving system (1) to displace it from its safety position to its declutched position, these abutments oppose the passing of the driving system (1) from its safety position to its declutched position .

2. Aircraft landing gear (0) according to Claim 1, comprising a support part (2), the wheel driving system (1) being mounted to rotate relative to this support part (2) via a first articulation (A1), the manoeuvring system (3) being mounted to rotate relative to this support part (2) via a second articulation (A2), the landing gear comprising first and second connecting rods (51, 52) mutually articulated about an articulation axis (X) of the connecting rods, the first connecting rod (51) being also articulated relative to the driving system (1) via a third articulation (A3), the second connecting rod (52) being also articulated relative to the support part (2) via a fourth articulation (A4), the first abutment (51a) being positioned on the first connecting rod (51) and the second abutment (52a) being positioned on the second connecting rod (52).

3. Landing gear (0) according to the preceding claim, in which the elastic return means (4) extends between first and second ends (41, 42) of the elastic return means, the first end (41) of the elastic return means (4) being mounted to rotate relative to said first and second connecting rods (51, 52) at said articulation axis (X) of these connecting rods, the second end (42) of the elastic return means (4) being mounted to rotate relative to the support part (2) via a fifth articulation (A5), the first, second, fourth and fifth articulations (A1, A2, A4, A5) being arranged at different positions on the support part (2) which are separated from one another.

4. Landing gear (0) according to either one of Claims 2 or 3, in which said articulation axis (X) of the connecting rods is arranged to be located facing a first face (P1) of a plane (P) passing through the third and fourth articulations (A3, A4) when the driving system (1) is in its declutched position and to be located facing a second face (P2) of this plane (P) when the driving system (1) is in its safety position.

5. Landing gear (0) according to any one of Claims 2 to 4, in which the manoeuvring system (3) which is mounted to rotate relative to the support part (2) via the second articulation (A2) is also mounted to rotate relative to the driving system (1) via a sixth articulation (A6) which is at a distance from the second articulation (A2).

6. Landing gear (0) according to any one of Claims 1 to 5, in which the actuator (3a) is a telescopic actuator of hydraulic or electrical type.

7. Landing gear (0) according to any one of the preceding claims, comprising first and second perforations (21a, 22) arranged to be in alignment relative to one another when the driving system (1) is in declutched position and to allow the passage of a pin through these first and second perforations (21a, 22) thus aligned to hold the driving system (1) in its declutched position.

8. Landing gear (0) according to any one of the preceding claims, comprising third (21b) and fourth (23) perforations arranged to be in alignment relative to one another when the driving system (1) is in safety position and to allow the passage of a pin through these third and fourth perforations (21b, 23) thus aligned to hold the driving system (1) in its safety position.

9. Landing gear (0) according to any one of Claims 1 to 8, comprising:
- a first mechanical stop (3a1) to define the first extreme configuration of the actuator; and
- locking mechanisms (3c) that can move between an unlocked configuration and a locked configuration;
these locking mechanisms (3c) in unlocked configuration allowing the displacement of the actuator between its first and second extreme configurations and these locking mechanisms (3c) in locked configuration immobilizing the actuator (3a) in its first extreme configuration by preventing the manoeuvring thereof from its first extreme configuration to its second extreme configuration.

10. Landing gear (0) according to Claim 9, in which the locking mechanisms are arranged to pass from the unlocked configuration to the locked configuration when the actuator arrives in its first extreme configuration.

11. Landing gear (0) according to Claim 10, in which the actuator bears the locking mechanisms.

12. Landing gear (0) according to Claim 11, in which:
- the actuator comprises a jacket (3e) and a part (3d) that is mobile inside this jacket (3e) all along the manoeuvring of the actuator between its first and second extreme configurations;
- the locking mechanisms comprise clamps or segments which adopt distinct positions relative to the jacket of the actuator when the locking mechanisms are displaced between the unlocked configuration and the locked configuration;
- these clamps or these segments being mechanically engaged with said mobile part (3d) of the actuator to prohibit the displacement of this mobile part (3d) relative to the jacket (3e) when the actuator is in its first extreme configuration and the locking mechanisms (3c) are in the locked configuration, the actuator being then immobilized by the clamps or segments of the locking mechanisms in its first extreme configuration; and
- these clamps or these segments being separated from said mobile part (3d) of the actuator to allow the displacement of this mobile part (3d) relative to the jacket (3e) when the locking mechanisms (3c) are in the unlocked configuration, the actuator then being manoeuvrable between its first and second extreme configurations.

13. Landing gear (0) according to any one of Claims 10 to 12, in which the locking mechanisms are arranged to pass from the locked configuration to the unlocked configuration under the effect of a feed of a chamber of the actuator with a hydraulic fluid having a pressure above a predetermined minimum pressure threshold.

14. Landing gear (0) according to any one of Claims 1 to 13, comprising a second mechanical stop (3a2) to define the second extreme configuration of the actuator (3a), this second mechanical stop being borne by the actuator (3a).
